# EUROPEAN PATENT APPLICATION

(11) **EP 4 535 577 A1**
(43) Date of publication of application: **09.04.2025**
(21) Application number: 23815222.7
(22) Date of filing: 30.05.2023
(51) Int. Cl.: H01R 13/631, B60L 53/16

(54) **POSITIONING DEVICE AND TRUCK**

(30) Priority: 30.05.2022 CN 202221333611 U
(71) Applicant: Sichuan Zhili Intelligent Energy Technology Co., Ltd., Yibin, Sichuan 644005 (CN)
(72) Inventor: LI, Liguo, Yibin, Sichuan 644005 (CN); HONG, Munan, Yibin, Sichuan 644005 (CN)
(74) Representative: Studio Torta S.p.A.
(86) International application number: PCT/CN2023/097210
(87) International publication number: WO 2023/232044

(57) **Abstract**

The present disclosure belongs to the technical field of heavy-duty electric trucks, and provides a positioning device and a truck. The positioning device includes: a location pin disposed on a location pin mounting base of a battery swap base, a location hole disposed on a location hole mounting base of a battery frame, and a buffer assembly. The location pin is inserted into the location hole. The buffer assembly is disposed between the location pin mounting base and the location pin and/or between the location pin and the location hole mounting base and/or on the location pin, such that in a case that a hole spacing deviation exists between the battery frame and the battery swap base, the buffer assembly offsets the hole spacing deviation, and in a case that a relative movement exists between the battery frame and the battery swap base, the buffer assembly provides a buffer for shock absorption in a radial direction of the location pin. The buffer assembly in the positioning device can prevent the location pin from moving relatively in the radial direction in the location hole, prevent the location pin from impacting on or colliding with an inner wall of the location hole, and ensure cooperation precision of the location pin and the location hole, thus improving reliability of an entire battery swap system.

## Description

The present disclosure claims the priority to Patent Application No. 202221333611.4 filed with the Chinese Patent Office on May 30, 2022 and entitled "A Positioning Device and Heavy-Duty Electric Truck".

### Technical Field

The present disclosure relates to the technical field of heavy-duty electric trucks, in particular to a positioning device and a truck.

### Background

In recent years, the development of new energy vehicles has been gaining momentum. With traction batteries as driving energy, the new energy vehicles feature low noise, less harmful gas emissions, environmental friendliness, etc. However, heavy-duty trucks are far from being economical and generalizable due to their high power consumption and long battery charging time. In order to solve such shortcomings of rechargeable heavy-duty trucks, battery-swappable heavy-duty trucks are developed. In the art known to inventors, according to a current technical solution of battery swap, a battery swap frame into which numerous battery packs are integrated cooperates with a vehicle-mounted battery swap base in a mechanical and electrical manner, and a battery system is quickly swapped by upwards hoisting or laterally forking the battery swap frame. A location structure for mechanical cooperation includes a location hinge pin on the vehicle-mounted battery swap base and a corresponding location through hole on the battery swap frame. By inserting the location hinge pin into the location through hole, the vehicle-mounted battery swap base and the battery swap frame are located relatively, and a plug of a battery swap connector on the vehicle-mounted battery swap base can be accurately inserted into a socket of a battery swap connector on the battery swap frame accordingly. In this way, the reliable electrical connection is implemented.

However, in the location structure, a gap exists between the location hinge pin and a pin hole due to a machining error. When the battery swap frame and the vehicle-mounted battery swap base are used on a vehicle, the location hinge pin will move radially in the location through hole, and collide with and impact on the inner wall of the location through hole. As a result, the location through hole changes in size, and decreases in precision after use over time. During battery swap, the plug of the battery swap connector on the vehicle-mounted battery swap base cannot be precisely inserted or even cannot be inserted into the socket of the battery swap connector on the battery swap frame due to low location precision, which affects use of the entire system.

### Summary

An objective of the present disclosure is to provide a positioning device and a truck, so as to solve the problem that in an existing location structure, since a location hinge pin collides with and impacts on an inner wall of a location through hole, the location through hole decreases in precision after use over time and location precision is insufficient.

In order to achieve the objective, according to one aspect of the present disclosure, a positioning device is provided. The positioning device is configured to locate a relative location between a battery frame and a battery swap base of a heavy-duty battery swap system of a truck. The positioning device includes: a location pin, where the location pin is disposed on a location pin mounting base of the battery swap base; a location hole, where the location hole is disposed on a location hole mounting base of the battery frame, and the location pin is inserted into the location hole; and a buffer assembly, where the buffer assembly is disposed between the location pin mounting base and the location pin and/or between the location pin and the location hole mounting base and/or on the location pin, such that in a case that a hole spacing deviation exists between the battery frame and the battery swap base, the buffer assembly offsets the hole spacing deviation, and in a case that a relative movement exists between the battery frame and the battery swap base, the buffer assembly provides a buffer for shock absorption in a radial direction of the location pin.

In some embodiments, the buffer assembly includes a first elastic sleeve, and the first elastic sleeve is located between the location pin and the location hole mounting base.

In some embodiments, the first elastic sleeve is located between the location pin and a wall of the location hole, an outer wall of the first elastic sleeve is configured with a first recess, and the location hole mounting base is embedded in the first recess, so as to fix the first elastic sleeve to the location hole mounting base.

In some embodiments, an inner wall of the first elastic sleeve is configured with a first metal sleeve, and a second metal sleeve is configured between an inner wall of the location hole and the first elastic sleeve.

In some embodiments, the buffer assembly includes a second elastic sleeve, and the second elastic sleeve is located between the location pin and the location pin mounting base.

In some embodiments, the location pin mounting base is configured with a through hole, the second elastic sleeve is configured with a second recess, the location pin penetrates the through hole, and the location pin mounting base is embedded in the second recess.

In some embodiments, the second elastic sleeve is configured with an elastic boss, the elastic boss is located between the location pin mounting base and the location hole mounting base, and a lower surface of the elastic boss abuts against an upper surface of the location pin mounting base.

In some embodiments, the positioning device further includes a nut, where the location pin is configured with an external thread; the nut is in threaded connection with the external thread, and the location pin is configured with a limit surface; and the limit surface and the nut abuts against two ends, in an axial direction of the location pin, of the second elastic sleeve respectively, such that the second elastic sleeve is located between the nut and the limit surface, and the location pin is further fixedly connected with the second elastic sleeve.

In some embodiments, the buffer assembly further includes an inner metal sleeve and an outer metal sleeve, the inner metal sleeve is disposed between the second elastic sleeve and the location pin, and the outer metal sleeve is disposed between the second elastic sleeve and the location pin mounting base.

In some embodiments, the inner metal sleeve is embedded between the nut and the limit surface.

In some embodiments, an end of the outer metal sleeve is configured with a flange, the location pin mounting base is configured with an upper end surface in an axial direction of the location pin, and the flange abuts against the upper end surface of the location pin mounting base.

In some embodiments, the buffer assembly includes a third elastic sleeve, the location pin includes a pin core and a pin shell, the third elastic sleeve is connected with the pin core and the pin shell respectively, and the third elastic sleeve is located between the pin core and the pin shell.

In some embodiments, the pin shell sleeves the pin core, an accommodation cavity is formed between the pin core and the pin shell, and the third elastic sleeve is located in the accommodation cavity.

In some embodiments, the buffer assembly includes a third elastic sleeve, an outer wall of the location pin is configured with an accommodation recess, and the third elastic sleeve is embedded in the accommodation recess.

In some embodiments, the location pin includes a first portion and a second portion; the first portion is conical, the second portion is cylindrical, and the second portion is disposed closer to the location pin mounting base compared with the first portion; and after the location pin is inserted into the location hole, the second portion is configured to cooperate with the location hole.

According to another aspect of the present disclosure, a truck is provided. The truck includes a plurality of positioning devices, where the positioning devices are disposed at intervals.

In some embodiments, the truck further includes a socket of a battery swap connector and a plug of the battery swap connector, where the socket of the battery swap connector is disposed on a battery frame of the truck, the plug of the battery swap connector is disposed on a battery swap base of the truck, and the plug of the battery swap connector is inserted into the socket of the battery swap connector.

In some embodiments, the plurality of the positioning devices are disposed at intervals in a length direction of a battery frame of the truck.

According to another aspect of the present disclosure, a positioning device is provided. The positioning device is configured to locate a relative location between a battery frame and a battery swap base of a heavy-duty battery swap system of a truck. The positioning device includes: a location pin, where the location pin is disposed on a location pin mounting base of the battery swap base; a location hole, where the location hole is disposed on a location hole mounting base of the battery frame, and the location pin is inserted into the location hole; and a buffer assembly, where the buffer assembly is disposed between the location pin mounting base and the location pin and/or between the location pin and the location hole mounting base and/or on the location pin, such that in a case that a location deviation occurs in a radial direction of the location pin and between the battery frame and the battery swap base, the buffer assembly is pressed to offset the location deviation, and in a case that a relative movement occurs between the battery frame and the battery swap base, the buffer assembly provides a buffer for shock absorption in the radial direction of the location pin.

The present disclosure has the following beneficial effects:
The present disclosure provides the positioning device and the truck. In the positioning device, the buffer assembly is disposed between the location pin mounting base and the location pin and/or between the location pin and the location hole mounting base and/or on the location pin, such that in a case that the hole spacing deviation exists between the battery frame and the battery swap base, the buffer assembly offsets the hole spacing deviation, and in a case that the relative movement exists between the battery frame and the battery swap base, the buffer assembly provides the buffer for the shock absorption in the radial direction of the location pin. Compared with rigid clearance fit between a location pin and a location hole in the prior art, the buffer assembly can make the location pin in flexible tight fit with the location hole, the location pin can be prevented from moving in the radial direction in the location hole, and the location pin can be prevented from impacting on or colliding with the inner wall of the location hole after the battery frame and the battery swap base are fitted to a vehicle accordingly. Thus, a size of the location hole is guaranteed unchanged, fitting precision of the location pin and the location hole is guaranteed, and reliability of a battery swap system of the heavy-duty truck is improved accordingly.

### Brief Description of the Drawings

Fig. 1 illustrates a schematic structural diagram of a positioning device according to a specific Example 1 of the present disclosure;
Fig. 2 illustrates a schematic partial structural diagram of the positioning device according to the specific Example 1 of the present disclosure;
Fig. 3 illustrates a partial sectional view of the positioning device according to the specific Example 1 of the present disclosure;
Fig. 4 illustrates a schematic partial structural diagram of a positioning device according to a specific Example 2 of the present disclosure;
Fig. 5 illustrates a partial sectional view of the positioning device according to the specific Example 2 of the present disclosure;
Fig. 6 illustrates a partial sectional view I of a positioning device according to a specific Example 4 of the present disclosure;
Fig. 7 illustrates a partial sectional view II of the positioning device according to the specific Example 4 of the present disclosure; and
Fig. 8 illustrates a partial sectional view of a positioning device according to a specific Example 6 of the present disclosure.

### In the figures:

1, battery frame;
2, battery swap base;
3, location hole;
4, location pin; 41, first portion; 42, second portion; 43, limit surface; 401, pin core; 402, pin shell;
51, first elastic sleeve; 52, second elastic sleeve; 53, third elastic sleeve; 54, inner metal sleeve; 55, outer metal sleeve;
6, elastic boss;
7, nut;
8, socket; and
9, plug.

### Detailed Description of the Embodiments

The present disclosure will be further described in detail below with reference to accompanying drawings and in conjunction with examples. It can be understood that particular examples described herein are merely used to explain the present disclosure, rather than limit the present disclosure. In addition, it should be noted that merely some structures rather than all structures related to the present disclosure are shown in the accompanying drawings for the convenience of description.

In the description of the present disclosure, unless expressly specified and defined otherwise, the terms such as "connected", "connection" and "fix" should be understood broadly and can denote, for example, fixed connection, detachable connection, integrated connection, mechanical connection, electric connection, direct connection, indirect connection through an intermediate medium, communication between interiors of two elements or interaction between two elements. For those ordinary skilled in the art, specific meanings of the above terms in the present disclosure can be understood according to specific circumstances.

In the present disclosure, unless otherwise specified and limited, a first feature "above" or "below" a second feature can indicate that the first feature is in direct contact with the second feature, or in indirect contact with the second feature by means of another feature therebetween. Further, the first feature "above", "over" and "on a top of" the second feature indicates that the first feature is over and obliquely above the second feature, or merely indicates that the first feature is higher than the second feature in horizontal height. The first feature "below", "under" and "on a bottom of" the second feature indicates that the first feature is under and obliquely below the second feature, or merely indicates that the first feature is lower than the second feature in horizontal height.

In the description of the example, the orientation or positional relationships indicated by the terms "above", "below", "right", etc. are based on the orientation or positional relationship shown in the accompanying drawings and are merely for facilitating the description and simplifying the description, rather than indicating or implying that a device or element referred to must have a particular orientation or be constructed and operated in a particular orientation, and cannot be interpreted as limiting the present disclosure accordingly. In addition, the terms "first" and "second" are merely used for distinguishing in description and have no special meanings.

### Example 1

The present disclosure provides a positioning device configured to locate a relative location between a battery frame 1 and a battery swap base 2 of a heavy-duty battery swap system of a truck. That is, the truck includes the heavy-duty battery swap system, the heavy-duty battery swap system includes the battery frame 1 and the battery swap base 2, and the load device is configured to locate the relative location between the battery frame 1 and the battery swap base 2.

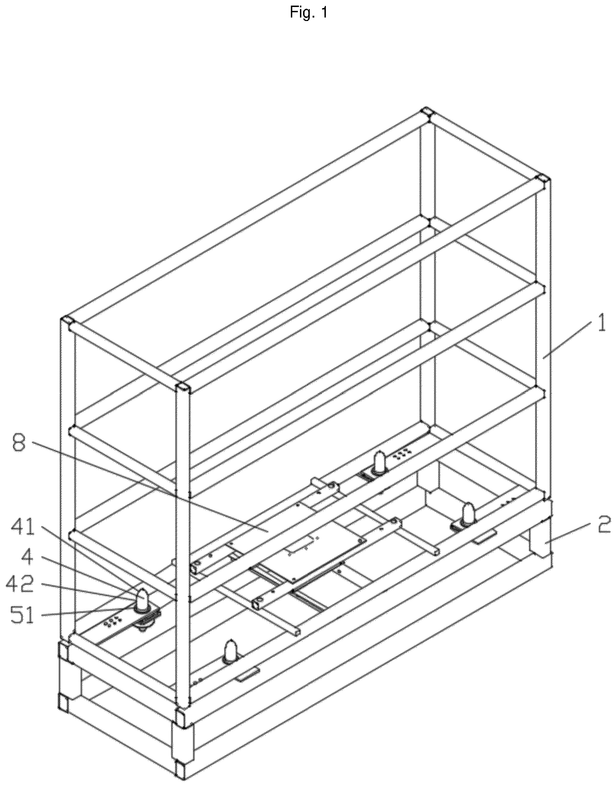

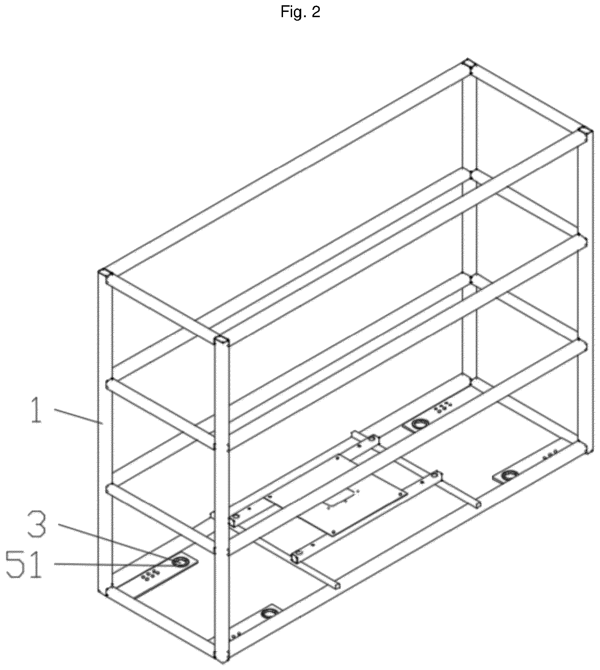

As shown in Figs. 1-3, the positioning device includes a location pin 4 disposed on a location pin mounting base of the battery swap base 2, a location hole 3 disposed on a location hole mounting base of the battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4. The buffer assembly of the positioning device can provide the buffer for the shock absorption between the location pin 4 and an inner wall of the location hole 3. Compared with rigid clearance fit between a location pin and a location hole in the prior art, the buffer assembly can make the location pin 4 in flexible tight fit with the location hole 3, the location pin 4 can be prevented from moving in the radial direction in the location hole 3, and the location pin 4 can be prevented from impacting on or colliding with the inner wall of the location hole 3 after the battery frame 1 is fitted to the battery swap base 2 of a vehicle accordingly. Thus, a size of the location hole 3 is guaranteed to be unchanged, fitting precision of the location pin 4 and the location hole 3 is guaranteed, reliability of an entire battery swap system is improved, and service lives of the location pin 4 and the location hole 3 can be prolonged.

It should be noted that the buffer assembly can absorb the hole spacing deviation in the case that the hole spacing deviation exists between the battery frame 1 and the battery swap base 2. That is, in the case that the hole spacing deviation exists between the battery frame 1 and the battery swap base 2, the buffer assembly can offset the hole spacing deviation. That is, in a case that a location deviation occurs in the radial direction of the location pin 4 and between the battery frame 1 and the battery swap base 2, the buffer assembly can be pressed to offset the location deviation. The location deviation in the radial direction of the location pin 4 and between the battery frame 1 and the battery swap base 2 indicates that the battery frame 1 and the battery swap base 2 deviate in the radial direction of the location pin 4 from a normal location of the battery frame 1 and the battery swap base 2.

In some embodiments, the buffer assembly includes a first elastic sleeve 51, and the first elastic sleeve 51 is located between the location pin 4 and the location hole mounting base. That is, the first elastic sleeve 51 is located between the location pin 4 and a hole wall of the location hole 3. The first elastic sleeve 51 can prevent rigid collision between the location pin 4 and the location hole mounting base, and play a buffering and shock absorption role between the location pin 4 and the location hole mounting base. In addition, in the case that the location deviation occurs between the battery frame 1 and the battery swap base 2 in the radial direction of the location pin 4, the first elastic sleeve 51 can be pressed to offset the location deviation.

In some embodiments, the first elastic sleeve 51 is made of a rubber material. It can be understood that the first elastic sleeve 51 can alternatively be made of other elastic materials.

In some embodiments, an outer wall of the first elastic sleeve 51 is configured with a first recess, and the inner wall of the location hole 3 is embedded in the first recess. That is, the location hole mounting base is embedded in the first recess. After the location pin 4 is inserted into the location hole 3, the first elastic sleeve 51 is located between the location pin 4 and the location hole mounting base. The inner wall of the location hole 3 is embedded in the first recess of the first elastic sleeve 51, that is, the location hole mounting base is embedded in the first recess, so as to fix the first elastic sleeve 51 to the location hole mounting base of the battery frame 1. Thus, the first elastic sleeve 51 is mounted or dismounted advantageously.

In some embodiments, the location pin 4 is fixedly disposed on the location pin mounting base, and the location pin 4 is rigidly and fixedly connected with the location pin mounting base.

In some embodiments, the location pin 4 is configured with a first portion 41 and a second portion 42. The first portion 41 is conical, the second portion 42 is cylindrical, and the second portion 42 is disposed closer to the location pin mounting base compared with the first portion 41.

### In some embodiments, the first portion 41 and the second portion 42 are integrally formed.

The conical first portion 41 can guide insertion of the location pin 4 into the location hole 3, such that the location pin 4 is inserted into the location hole 3 advantageously. The second portion 42 is cylindrical. After the location pin 4 is inserted into the location hole 3, the second portion 42 of the location pin 4 cooperates with the location hole 3 in locating the battery frame 1 and the battery swap base 2.

In some embodiments, an inner wall of the first elastic sleeve 51 is configured with a first metal sleeve (not shown in the figure), and a second metal sleeve (not shown in the figure) is configured between the inner wall of the location hole 3 and the first elastic sleeve 51. The first metal sleeve is in direct contact with the second portion 42, so as to prolong a service life of the first elastic sleeve 51.

### Example 2

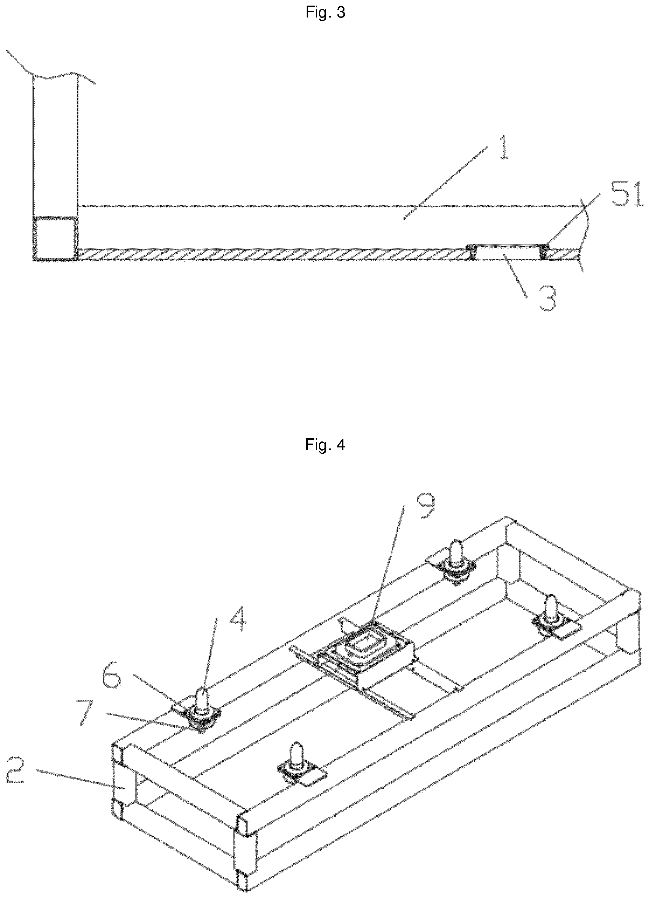

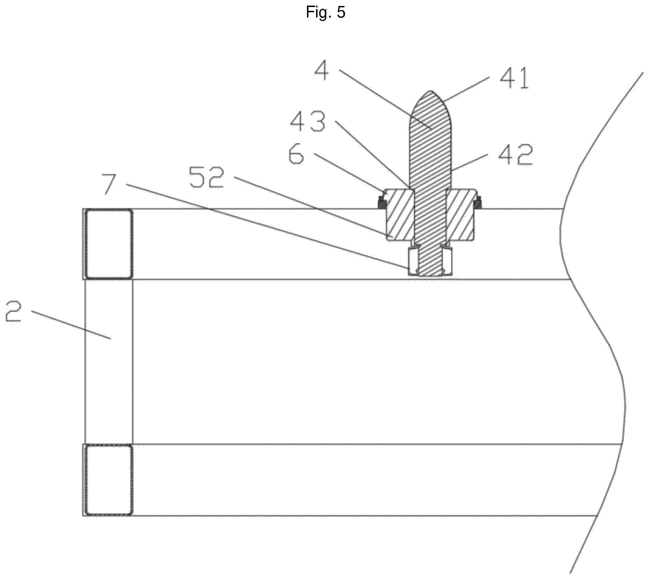

As shown in Figs. 4 and 5, a positioning device includes a location pin 4 disposed on a location pin mounting base of a battery swap base 2, a location hole 3 disposed on a location hole mounting base of a battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4.

In this example, the buffer assembly includes a second elastic sleeve 52, and the second elastic sleeve 52 is located between the location pin 4 and the location pin mounting base. The second elastic sleeve 52 fills a clearance between the location pin 4 and the location pin mounting base, such that the location pin 4 and the location pin mounting base are in flexible tight fitting. The non-rigid connection between the location pin 4 and the location pin mounting base can prevent mounting precision of the location pin 4 mounted on the location pin mounting base and mechanical reliability of the location pin 4 from being affected by rigid collision between the location pin 4 and the location pin mounting base.

In some embodiments, the second elastic sleeve 52 is composed of a plurality of rubber sheets or a plurality of springs. It can be understood that the second elastic sleeve 52 can alternatively be made of other elastic materials.

In some embodiments, the second elastic sleeve 52 is configured with a second recess, the location pin mounting base is configured with a through hole, the location pin 4 penetrates the through hole, and an inner wall of the through hole is embedded in the second recess of the second elastic sleeve 52. That is, the location pin mounting base is embedded in the second recess.

In some embodiments, the second elastic sleeve 52 is configured with an elastic boss 6, and the location pin mounting base supports the elastic boss 6, and the elastic boss 6 is located between the location pin mounting base and the location hole mounting base. The elastic boss 6 is supported by the location pin mounting base, that is, a lower surface of the elastic boss 6 abuts against an upper surface of the location pin mounting base, so as to fix the second elastic sleeve 52 to the location pin mounting base. Optionally, the second elastic sleeve 52 and the elastic boss 6 are integrally formed, such that a structural strength can be improved.

In some embodiments, the positioning device further includes a nut 7. The location pin 4 is configured with an external thread. The nut 7 is in threaded connection with the external thread, and the location pin 4 is configured with a limit surface 43. The limit surface 43 and the nut 7 abut against two ends, in an axial direction of the location pin 4, of the second elastic sleeve 52 respectively. In a case that the location pin 4 and the second elastic sleeve 52 are fitted, the location pin 4 penetrates the second elastic sleeve 52, and the limit surface 43 of the location pin 4 abuts against an upper end surface, in the axial direction of the location pin 4, of the second elastic sleeve 52. Then, the nut 7 is in threaded connection to the external thread of the location pin 4, such that the nut 7 abuts against a lower end surface, in the axial direction of the location pin 4, of the second elastic sleeve 52. The second elastic sleeve 52 is located between the nut 7 and the limit surface 43, such that the location pin 4 is fixedly connected with the second elastic sleeve 52. The second elastic sleeve 52 can be fitted to the location pin mounting base at first, and then the location pin 4 can be fitted to the second elastic sleeve 52. Alternatively, the location pin 4 can be fitted to the second elastic sleeve 52 at first, and then a fitted body of the location pin 4 and the second elastic sleeve 52 can be mounted to the location pin mounting base.

In some embodiments, the location pin 4 is configured with a first portion 41 and a second portion 42. The first portion 41 is conical, the second portion 42 is cylindrical, and the second portion 42 is disposed closer to the location pin mounting base compared with the first portion 41.

In some embodiments, the first portion 41 and the second portion 42 are integrally formed.

The conical first portion 41 can guide insertion of the location pin 4 into the location hole 3, such that the location pin 4 is inserted into the location hole 3 advantageously. The second portion 42 is cylindrical. After the location pin 4 is inserted into the location hole 3, the second portion 42 of the location pin 4 cooperates with the location hole 3 in locating the battery frame 1 and the battery swap base 2. In this Example 2, the second portion 42 is in rigid contact with an inner wall of the location hole 3.

### Example 3

This example is different from Example 2 in that a buffer assembly of this example further includes an inner metal sleeve 54 and an outer metal sleeve 55, and the other structures are the same.

Specifically, in this example, the buffer assembly further includes the inner metal sleeve 54 and the outer metal sleeve 55. The inner metal sleeve 54 is disposed between a second elastic sleeve 52 and a location pin 4, and the outer metal sleeve 55 is disposed between the second elastic sleeve 52 and a location pin mounting base. It can be understood that both the inner metal sleeve 54 and the outer metal sleeve 55 are made of metal materials, can bear high-strength friction and have high wear resistance. The inner metal sleeve 54 is located between the second elastic sleeve 52 and the location pin 4, and the outer metal sleeve 55 is located between the second elastic sleeve 52 and the location pin mounting base. The second elastic sleeve 52 can be protected, and a service life of the second elastic sleeve 52 can be prolonged.

In some embodiments, both the inner metal sleeve 54 and the outer metal sleeve 55 are fixedly connected with the second elastic sleeve 52, and the inner metal sleeve 54 is embedded between a limit surface 43 of the location pin 4 and a nut 7. An end of the outer metal sleeve 55 is configured with a flange. In an axial direction of the location pin 4, the location pin mounting base is configured with an upper end surface. The flange abuts against the upper end surface of the location pin mounting base, such that the inner metal sleeve 54, the outer metal sleeve 55, the second elastic sleeve 52 and the location pin 4 can be stably fixed to the location pin mounting base.

### Example 4

A positioning device includes a location pin 4 disposed on a location pin mounting base of a battery swap base 2, a location hole 3 disposed on a location hole mounting base of a battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4.

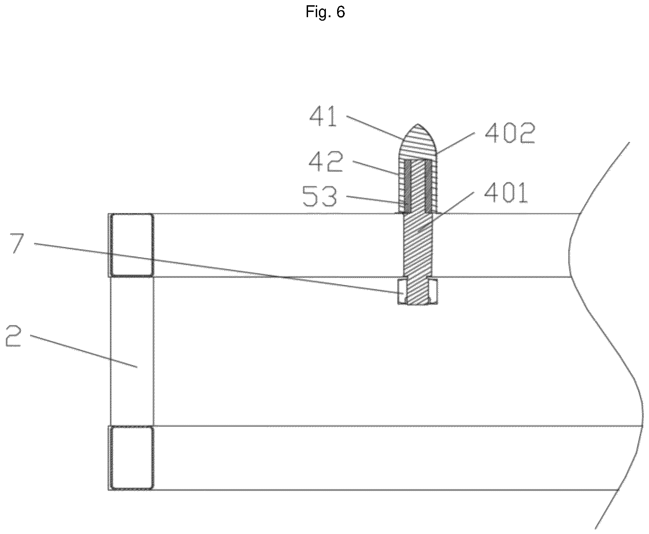

As shown in Fig. 6, the buffer assembly includes a third elastic sleeve 53, the location pin 4 includes a pin core 401 and a pin shell 402, the location pin 4 includes a pin core 401 and a pin shell 402, the third elastic sleeve 53 is connected with the pin core 401 and the pin shell 402, and the third elastic sleeve 53 is located between the pin core 401 and the pin shell 402.

Specifically, the pin shell 402 sleeves the pin core 401, an accommodation cavity is formed between the pin core 401 and the pin shell 402, and the third elastic sleeve 53 is located in the accommodation cavity. The third elastic sleeve 53 is located in the accommodation cavity formed between the pin core 401 and the pin shell 402, and the third elastic sleeve 53 can play an elastic buffering role between the pin core 401 and the pin shell 402, thus preventing the location hole mounting base from rigidly colliding with the location pin 4. The pin core 401 and the pin shell 402 are made of a high-strength wear-resistant metal material. The third elastic sleeve 53 can be made of a plurality of rubber sheets; alternatively, the third elastic sleeve 53 is a structure similar to a particle damper, that is, a particle substance is filled between the pin core 401 and the pin shell 402 to implement the buffer for the shock absorption role of a location pin hole structure. It can be understood that the pin shell 402 is configured with a first portion 41 and a second portion 42, the first portion 41 is conical, and the second portion 42 is cylindrical.

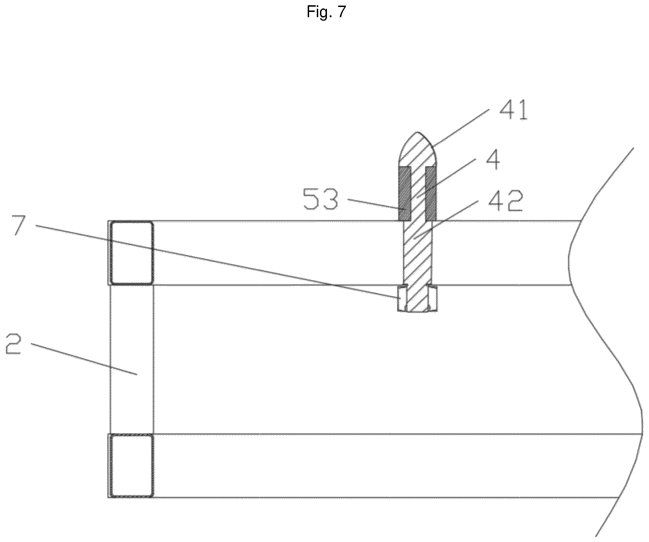

As an alternative solution, as shown in Fig. 7, an outer wall of the location pin 4 is configured with an accommodation recess, and the third elastic sleeve 53 is embedded in the accommodation recess. The third elastic sleeve 53 has a damping effect. When the third elastic sleeve 53 is embedded in the accommodation recess configured in the outer wall of the location pin 4, the third elastic sleeve 53 between the location pin 4 and an inner wall of the location hole 3 can implement flexible tight fit between the location pin 4 and the inner wall of the location hole 3, and also absorb the rigid collision of the location hole mounting base on the location pin 4. Thus, a service life of the location pin 4 is prolonged. It can be understood that the pin shell 4 is configured with the first portion 41 and the second portion 42, the first portion 41 is conical, and the second portion 42 is cylindrical. The accommodation recess is disposed in the second portion 42.

In some embodiments, the location pin 4 is fixedly disposed on the location pin mounting base, and the location pin 4 is rigidly and fixedly connected with the location pin mounting base.

### Example 5

A positioning device includes a location pin 4 disposed on a location pin mounting base of a battery swap base 2, a location hole 3 disposed on a location hole mounting base of a battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4.

In this example, the buffer assembly includes a first elastic sleeve 51 and a second elastic sleeve 52, and the first elastic sleeve 51 is located between the location pin 4 and the location hole mounting base. The second elastic sleeve 52 is located between the location pin 4 and the location pin mounting base.

### Example 6

This example is different from Example 5 in that a buffer assembly of this example further includes an inner metal sleeve 54 and an outer metal sleeve 55 on the basis of Example 5, and the other structures are the same.

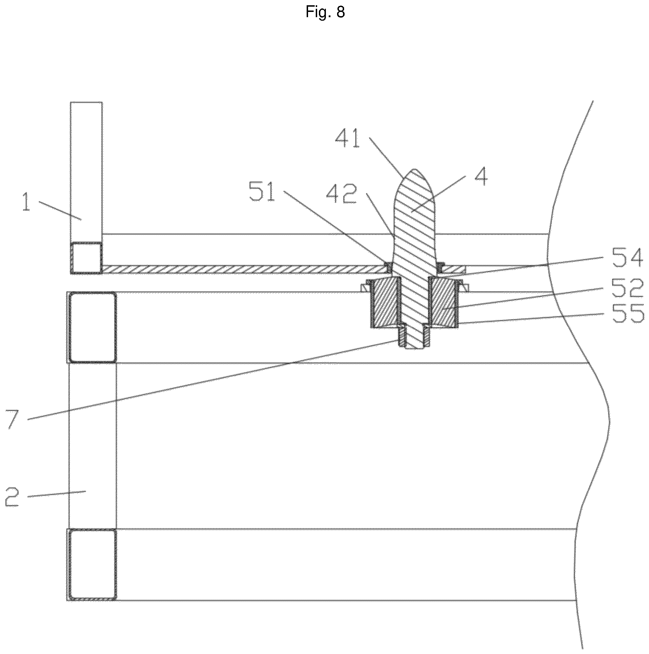

Specifically, as shown in Fig. 8, in this example, the buffer assembly further includes the inner metal sleeve 54 and the outer metal sleeve 55, the inner metal sleeve 54 is disposed between a second elastic sleeve 52 and a location pin 4, and the outer metal sleeve 55 is disposed between the second elastic sleeve 52 and a location pin mounting base. The inner metal sleeve 54 and the outer metal sleeve 55 can bear high-strength friction and have high wear resistance. The second elastic sleeve 52 can be protected and a service life of the second elastic sleeve 52 can be prolonged.

### Example 7

A positioning device includes a location pin 4 disposed on a location pin mounting base of a battery swap base 2, a location hole 3 disposed on a location hole mounting base of a battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4. The location pin 4 includes a pin core 401 and a pin shell 402, and the pin shell 402 sleeves the pin core 401.

In this example, the buffer assembly includes a first elastic sleeve 51 and a third elastic sleeve 53. The first elastic sleeve 51 is located between the location pin 4 and the location hole mounting base. The location pin 4 includes the pin core 401 and the pin shell 402, and the pin shell 402 sleeves the pin core 401. The third elastic sleeve 53 is located between the pin core 401 and the pin shell 402; alternatively, an outer wall of the location pin 4 is configured with an accommodation recess, and the third elastic sleeve 53 is embedded in the accommodation recess.

In some embodiments, the location pin 4 is fixedly disposed on the location pin mounting base, and the location pin 4 is rigidly and fixedly connected with the location pin mounting base.

### Example 8

A positioning device includes a location pin 4 disposed on a location pin mounting base of a battery swap base 2, a location hole 3 disposed on a location hole mounting base of a battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4.

In this example, the buffer assembly includes a second elastic sleeve 52 and a third elastic sleeve 53. The second elastic sleeve 52 is located between the location pin 4 and the location pin mounting base. The buffer assembly includes the third elastic sleeve 53. The location pin 4 includes a pin core 401 and a pin shell 402, and the pin shell 402 sleeves the pin core 401. The third elastic sleeve 53 is located between the pin core 401 and the pin shell 402; alternatively, an outer wall of the location pin 4 is configured with an accommodation recess, and the third elastic sleeve 53 is embedded in the accommodation recess.

### Example 9

A positioning device includes a location pin 4 disposed on a location pin mounting base of a battery swap base 2, a location hole 3 disposed on a location hole mounting base of a battery frame 1, and a buffer assembly. The location pin 4 is inserted into the location hole 3. The buffer assembly is disposed between the location pin mounting base and the location pin 4 and/or between the location pin 4 and the location hole mounting base and/or on the location pin 4. The buffer assembly can absorb a hole spacing deviation in a case that the hole spacing deviation exists between the battery frame 1 and the battery swap base 2, and in a case that a relative movement exists between the battery frame 1 and the battery swap base 2, the buffer assembly can provide a buffer for shock absorption in a radial direction of the location pin 4.

In this example, the buffer assembly includes a first elastic sleeve 51, a second elastic sleeve 52 and a third elastic sleeve 53. The first elastic sleeve 51 is located between the location pin 4 and the location hole mounting base. The second elastic sleeve 52 is located between the location pin 4 and the location pin mounting base. The location pin 4 includes a pin core 401 and a pin shell 402, and the pin shell 402 sleeves the pin core 401. The third elastic sleeve 53 is located between the pin core 401 and the pin shell 402; alternatively, an outer wall of the location pin 4 is configured with an accommodation recess, and the third elastic sleeve 53 is embedded in the accommodation recess.

### Example 10

The present disclosure further provides a truck. The truck includes a plurality of positioning devices, and the positioning devices are disposed at intervals.

The truck further includes a socket 8 of a battery swap connector of a battery frame 1 and a plug 9 of the battery swap connector of a battery swap base 2. The plug 9 of the battery swap connector is inserted into the socket 8 of the battery swap connector.

In some embodiments, the plurality of the positioning devices are disposed at intervals in a length direction of the battery frame 1. Locating effects of the battery frame 1 and the battery swap base 2 can be improved. In the truck, the plug 9 of the battery swap connector is inserted into the socket 8 of the battery swap connector, so as to implement electrical cooperation between the battery frame 1 and the battery swap base 2. A location pin 4 is inserted into a location hole 3, so as to locate the battery frame 1 and the battery swap base 2. Thus, the plug 9 of the battery swap connector is aligned with the socket 8 of the battery swap connector, and the plug 9 of the battery swap connector can be precisely inserted into the socket 8 of the battery swap connector advantageously. The condition that the plug 9 of the battery swap connector is inserted into the socket 8 of the battery swap connector under the condition that the plug 9 is not aligned with the socket 8 of the battery swap connector, thus damage to the battery swap connector is avoided. A service life of the battery swap connector can be prolonged and a reliability of an electrical connection can be improved.

Specifically, the truck is a heavy-duty electric truck.

Apparently, the above examples of the present disclosure are merely instances used for clearly describing the present disclosure rather than limiting embodiments of the present disclosure. Those skilled in the art can make various obvious changes, readjustments and substitutions without departing from the protection scope of the present disclosure. It is unnecessary or impossible to enumerate all embodiments herein. Any modification, equivalent substitution, improvement, etc. made within the spirit and principles of the present disclosure should fall within the protection scope of the claims of the present disclosure.

## Claims

1. A positioning device, configured to locate a relative location between a battery frame (1) and a battery swap base (2) of a heavy-duty battery swap system of a truck; comprising:
a location pin (4), wherein the location pin (4) is disposed on a location pin mounting base of the battery swap base (2);
a location hole (3), wherein the location hole (3) is disposed on a location hole mounting base of the battery frame (1), and the location pin (4) is inserted into the location hole (3); and
a buffer assembly, wherein the buffer assembly is disposed between the location pin mounting base and the location pin (4)and/or between the location pin (4) and the location hole mounting base and/or on the location pin (4), such that in a case that a hole spacing deviation exists between the battery frame (1) and the battery swap base (2), the buffer assembly offsets the hole spacing deviation, and in a case that a relative movement exists between the battery frame (1) and the battery swap base (2), the buffer assembly provides a buffer for shock absorption in a radial direction of the location pin (4).

2. The positioning device as claimed in claim 1, wherein the buffer assembly comprises a first elastic sleeve (51), and the first elastic sleeve (51) is located between the location pin (4) and the location hole mounting base.

3. The positioning device as claimed in claim 2, wherein the first elastic sleeve (51) is located between the location pin (4) and a wall of the location hole (3), an outer wall of the first elastic sleeve (51) is configured with a first recess, and the location hole mounting base is embedded in the first recess, so as to fix the first elastic sleeve (51) to the location hole mounting base.

4. The positioning device as claimed in claim 2, wherein an inner wall of the first elastic sleeve (51) is configured with a first metal sleeve, and a second metal sleeve is configured between an inner wall of the location hole (3) and the first elastic sleeve (51).

5. The positioning device as claimed in claim 1, wherein the buffer assembly comprises a second elastic sleeve (52), and the second elastic sleeve (52) is located between the location pin (4) and the location pin mounting base.

6. The positioning device as claimed in claim 5, wherein the location pin mounting base is configured with a through hole, the second elastic sleeve (52) is configured with a second recess, the location pin (4) penetrates the through hole, and the location pin mounting base is embedded in the second recess.

7. The positioning device as claimed in claim 5, wherein the second elastic sleeve (52) is configured with an elastic boss (6), the elastic boss (6) is located between the location pin mounting base and the location hole mounting base, and a lower surface of the elastic boss (6) abuts against an upper surface of the location pin mounting base.

8. The positioning device as claimed in claim 5, further comprising a nut (7), wherein the location pin (4) is configured with an external thread; the nut (7) is in threaded connection with the external thread, and the location pin (4) is configured with a limit surface (43); and the limit surface (43) and the nut (7) abuts against two ends, in an axial direction of the location pin (4), of the second elastic sleeve (52) respectively, such that the second elastic sleeve (52) is located between the nut (7) and the limit surface (43), and the location pin (4) is further fixedly connected with the second elastic sleeve (52).

9. The positioning device as claimed in claim 5, wherein the buffer assembly further comprises an inner metal sleeve (54) and an outer metal sleeve (55), the inner metal sleeve (54) is disposed between the second elastic sleeve (52) and the location pin (4), and the outer metal sleeve (55) is disposed between the second elastic sleeve (52) and the location pin mounting base.

10. The positioning device as claimed in claim 8, wherein the buffer assembly further comprises an inner metal sleeve (54) and an outer metal sleeve (55), the inner metal sleeve (54) is disposed between the second elastic sleeve (52) and the location pin (4), the outer metal sleeve (55) is disposed between the second elastic sleeve (52) and the location pin mounting base, and the inner metal sleeve (54) is embedded between the nut (7) and the limit surface (43).

11. The positioning device as claimed in claim 9, wherein an end of the outer metal sleeve (55) is configured with a flange, the location pin mounting base is configured with an upper end surface in an axial direction of the location pin (4), and the flange abuts against the upper end surface of the location pin mounting base.

12. The positioning device as claimed in claim 1, wherein the buffer assembly comprises a third elastic sleeve (53), the location pin (4) comprises a pin core (401) and a pin shell (402), the third elastic sleeve (53) is connected with the pin core (401) and the pin shell (402) respectively, and the third elastic sleeve (53) is located between the pin core (401) and the pin shell (402).

13. The positioning device as claimed in claim 12, wherein the pin shell (402) sleeves the pin core (401), an accommodation cavity is formed between the pin core (401) and the pin shell (402), and the third elastic sleeve (53) is located in the accommodation cavity.

14. The positioning device as claimed in claim 1, wherein the buffer assembly comprises a third elastic sleeve (53), an outer wall of the location pin (4) is configured with an accommodation recess, and the third elastic sleeve (53) is embedded in the accommodation recess.

15. The positioning device as claimed in any one of claims 1 to 14, wherein the location pin (4) comprises a first portion (41) and a second portion (42); the first portion (41) is conical, the second portion (42) is cylindrical, and the second portion (42) is disposed closer to the location pin mounting base compared with the first portion (41); and after the location pin (4) is inserted into the location hole (3), the second portion (42) is configured to cooperate with the location hole (3).

16. A truck, comprising a plurality of positioning devices as claimed in any one of claims 1 to 15, wherein the plurality of positioning devices are disposed at intervals.

17. The truck as claimed in claim 16, further comprising a socket (8) of a battery swap connector and a plug (9) of the battery swap connector, wherein the socket (8) of the battery swap connector is disposed on a battery frame (1) of the truck, the plug (9) of the battery swap connector is disposed on a battery swap base (2) of the truck, and the plug (9) of the battery swap connector is inserted into the socket (8) of the battery swap connector.

18. The truck as claimed in claim 16, wherein the plurality of the positioning devices are disposed at intervals in a length direction of a battery frame (1) of the truck.

19. A positioning device, configured to locate a relative location between a battery frame (1) and a battery swap base (2) of a heavy-duty battery swap system of a truck; comprising:
a location pin (4), wherein the location pin (4) is disposed on a location pin mounting base of the battery swap base (2);
a location hole (3), wherein the location hole (3) is disposed on a location hole mounting base of the battery frame (1), and the location pin (4) is inserted into the location hole (3); and
a buffer assembly, wherein the buffer assembly is disposed between the location pin mounting base and the location pin (4) and/or between the location pin (4) and the location hole mounting base and/or on the location pin (4), such that in a case that a location deviation occurs in a radial direction of the location pin (4) and between the battery frame (1) and the battery swap base (2), the buffer assembly is pressed to offset the location deviation, and in a case that a relative movement occurs between the battery frame (1) and the battery swap base (2), the buffer assembly provides a buffer for shock absorption in the radial direction of the location pin (4).
